# EUROPEAN PATENT SPECIFICATION

(11) **EP 0 302 571 B1**
(45) Date of publication and mention of the grant of the patent: **09.06.1993**
(21) Application number: 88201674.4
(22) Date of filing: 03.08.1988
(51) Int. Cl.: A22C 13/00

(54) **A synthetic casing coated with a lubricant**
Mit einem Schmiermittel beschichtete synthetische Hülle
Enveloppe synthétique revêtue d'un lubrifiant

(30) Priority: 05.08.1987 NL 8701845
(43) Date of publication of application: 08.02.1989
(73) Proprietor: Krehalon Industrie B.V., NL-7418 EE Deventer (NL)
(72) Inventor: Zijlstra, Albert, NL-6843 XS Arnhem (NL)
(74) Representative: Kooy, Leendert Willem

(56) References cited:
- FR-A- 1 559 258
- FR-A- 2 349 282

## Description

The invention relates to a synthetic casing the outer surface of which is coated with a lubricant and to a process for preparing sausage comprising stuffing a synthetic casing, the outer surface of which is coated with a lubricant, with a meat emulsion.

Synthetic casings are prepared as hollow, thin-walled tubes of very great length. For convenience in handling, said synthetic casings are shirred (folded) from a length of tens of meters or more down to a compressed length of the order of centimeters up to a few decimeters. Before proceeding with the shirring a lubricant is applied on the outer surface of said casing in order to prevent damage of the casing as a result of heat development by friction of the shirr-wheels. A second function of the lubricant is being able to slow down uniformly the casing during stuffing with a meat emulsion. Irregular slowing down leads to undesirable differences in dimensions of the sausages having a constant weight.

As a lubricant often a medicinal oil, e.g. liquid paraffin, is used in amounts of 1-10 g/m². A large disadvantage of paraffinic oil is that it is hard to remove after the synthetic casing is stuffed with a meat emulsion. Even after a boiling procedure at about 80°C a considerable portion of the oil remains on the casing.

Except for the aesthetic problem that the sausages feel fatty, there is the technical problem that pressure-sensitive stickers do not or not sufficiently adhere to the sausage. This may lead to serious problems and even give cause to infringement of the law.

FR-A-1,559,258 discloses a process for wetting synthetic casings in which the casings are first shirred and then sprayed with a small quality of water and/or a lubricant. Lubricants such as paraffinic oil or glycerol can be used to cover the outer surface of the synthetic casing.

FR-A-2,349,282 describes the treatment of sausage casings to prevent oversize sausage links. Antifriction adjuvants are applied to the external walls of cellulosic casings; these adjuvants can comprise an aqueous dispersion of a mineral oil. The content of mineral oil is 0.25-1.0% by weight. Additionally an emulsifying agent may be included in the aqueous dispersion as a second adjuvant. The concentration of said emulsifying agent is equal to that of the antifriction adjuvant, i.e. 0.25-1.0% by weight.

An object of this invention is to provide a synthetic casing coated with a lubricant, which lubricant can be removed easily from the casing. Furthermore, the lubricant should be suitable for food, should have little taste and smell and should be transparent and insensitive for decay.

According to this invention, there is provided a synthetic casing the outer surface of which is coated with a lubricant which consists of 90-99% by weight of paraffinic oil and 1-10% by weight of an emulsifying agent and does not contain water.

The lubricant used according to the invention has an excellent lubricating effect while it can be removed with water because it forms an emulsion with water. Further, said lubricant does not have a dissolving effect on printing inks, so that it can also be used with printed casings.

It is preferred that the emulsifying agent in said lubricants is an ester of a non-branched, saturated fatty acid having 8-22 carbon atoms, in particular 12-18 carbon atoms, and polyalkylene glycol, in particular polyethylene glycol or polypropylene glycol having a polymerisation degree of n = 8-14. An emulsifying agent consisting of the ester of myristic acid and polyethylene glycol-400 is preferably used. This emulsifying agent gives the best results and causes the lubricant to be rapidly and easily removed with water.

The total amount of the emulsifying agent is 1-10% by weight, and preferably 2-3% by weight, based on the total amount of the lubricant.

The paraffinic oil is generally medicinal white paraffinic oil which meets the most important European Pharmacopoeiae. Characterizing analysis data are for example:
kinematic viscosity at 20°C: 14-84 mm²/s; solidification point -6 to -18°C. Examples are Marcol® medicinal white oil, types 52, 82, 172; Chevron® white mineral oil type 1002.

The lubricant according to the invention is usually used in an amount of 1-10 g/m², preferably 2-5 g/m².

The synthetic casing may be prepared of a variety of synthetic materials. The synthetic materials often used for this purpose are e.g. polyvinylidene chloride, nylon, polyester etc.

The lubricants according to the invention are characterized in that they can be removed with water by emulsifying. It is not required that the water is heated, and generally for convenience cold water will be used, as is used in excess to cool off the sausage mass. It is convenient to use some mechanic energy (running water or stirring) to emulsify the oil and emulsifying agent with cold water.

According to another aspect of the invention there is provided a process for preparing sausage, comprising stuffing synthetic casing, the outer surface of which is coated with the lubricant of the invention, with a meat emulsion.

### Example

A synthetic casing consisting of polyvinylidene chloride is spray coated at the outer surface in an amount of 5 g/m² with a mixture of 98% of paraffinic oil Marcol® 82 and 2% of the ester of myristic acid and polyethylene glycol-400. The lubricant is present on the casing in the form of a film. The lubricant has an excellent effect, both during shirring the casing and during stuffing the casing with a meat emulsion: no damage occurs and during stuffing the casing can be slowed down uniformly. After stuffing the meat emulsion the sausage mass is cooled with running cold water from about 85°C to 15°C during 1-3 hours, as a result of which the lubricant is removed simultaneously already in 5-15 s. After flushing no lubricant is found on the synthetic casing.

## Claims

1. A synthetic casing, the outer surface of which is coated with a lubricant, **characterized in that** said lubricant consists of 90-99% by weight of paraffinic oil and 1-10% by weight of an emulsifying agent and does not contain water.

2. A synthetic casing according to claim 1, **characterized in tha**t the emulsifying agent is an ester of a non-branched, saturated fatty acid having 8-22 carbon atoms and polyalkylene glycol having a polymerisation degree of n = 8-14.

3. A synthetic casing according to claim 2, **characterized in that** the emulsifying agent is an ester of a non-branched saturated fatty acid having 8-22 carbon atoms and polyethylene glycol or polypropylene glycol having a polymerisation degree of n = 8-14.

4. A synthetic casing according to claim 3, **characterized in that** the emulsifying agent is an ester of a non-branched, saturated fatty acid having 8-22 carbon atoms and polyethylene glycol-400.

5. A synthetic casing according to claims 2-4, **characterized in that** the fatty acid has 12-18 carbon atoms.

6. A synthetic casing according to claims 2-4, **characterized in that** the fatty acid is myristic acid.

7. A synthetic casing according to any of the claims 1-6, **characterized in that** the amount of the emulsifying agent is 2-3% by weight.

8. A process for preparing sausage comprising stuffing synthetic casing, the outer surface of which is coated with a lubricant, with a meat emulsion, **characterized in that** a synthetic casing according to one of the claims 1-7 is applied.

## Patentansprüche

1. Kunstdarm, dessen Außenoberfläche mit einem Schmiermittel überzogen ist, dadurch **gekennzeichnet,** daß das genannte Schmiermittel aus 90-99 Gew.-% Paraffinöl und 1-10 Gew.-% Emulgator besteht und kein Wasser enthält.

2. Kunstdarm nach Anspruch 1, dadurch **gekennzeichnet,** daß der Emulgator ein Ester einer unverzweigten gesättigten Fettsäure mit 8-22 Kohlenstoffatomen und Polyalkylenglycol mit einem Polymerisationsgrad von n = 8-14 ist.

3. Kunstdarm nach Anspruch 2, dadurch **gekennzeichnet,** daß der Emulgator ein Ester einer unverzweigten gesättigten Fettsäure mit 8-22 Kohlenstoffatomen und Polyethylenglycol oder Polypropylenglycol mit einem Polymerisationsgrad von n = 8-14 ist.

4. Kunstdarm nach Anspruch 3, dadurch **gekennzeichnet,** daß der Emulgator ein Ester einer unverzweigten gesättigten Fettsäure mit 8-22 Kohlenstoffatomen und Polyethylenglycol 400 ist.

5. Kunstdarm nach den Ansprüchen 2-4, dadurch **gekennzeichnet,** daß die Fettsäure 12-18 Kohlenstoffatome hat.

6. Kunstdarm nach den Ansprüchen 2-4, dadurch **gekennzeichnet,** daß die Fettsäure Myristinsäure ist.

7. Kunstdarm nach einem der Ansprüche 1-6, dadurch **gekennzeichnet,** daß die Menge des Emulgators 2-3 Gew.-% ist.

8. Verfahren zur Herstellung von Wurst, das das Stopfen eines Kunstdarms, dessen Außenoberfläche mit einem Schmiermittel überzogen ist, mit einer Fleischemulsion umfaßt, dadurch **gekennzeichnet,** daß ein Kunstdarm nach einem der Ansprüche 1-7 verwendet wird.

## Revendications

1. Enveloppe synthétique dont la surface extérieure est revêtue d'un lubrifiant caractérisée en ce que ledit lubrifiant, qui ne contient pas d'eau, est constitué à 90-99% en poids d'huile de paraffine et à 1 - 10% en poids d'un agent émulsifiant.

2. Enveloppe synthétique selon la revendication 1, caractérisée en ce que l'agent émulsifiant est un ester d'un acide gras saturé non ramifié, possédant 8 - 22 atomes de carbone et d'un polyalkylène glycol dont le degré de polymérisation est égal à n = 8 - 14.

3. Enveloppe synthétique selon la revendication 2, caractérisée en ce que l'agent émulsifiant est un ester d'un acide gras saturé non ramifié, possédant 8 - 22 atomes de carbone et de polyéthylène glycol ou de polypropylène glycol dont le degré de polymérisation est égal à n = 8 - 14.

4. Enveloppe synthétique selon la revendication 3, caractérisée en ce que l'agent émulsifiant est un ester d'un acide gras saturé non ramifié, possédant 8-22 atomes de carbone et de polyéthylène glycol-400.

5. Enveloppe synthétique selon les revendication 2-4, caractérisée en ce que l'acide gras possède 12-18 atomes de carbone.

6. Enveloppe synthétique selon les revendication 2-4, caractérisée en ce que l'acide gras est l'acide myristique.

7. Enveloppe synthétique selon les revendication 1-6, caractérisée en ce que la quantité d'agent émulsifiant correspond à 2 - 3 % en poids.

8. Procédé pour la préparation de saucisses comprenant le remplissage d'une enveloppe synthétique dont la surface extérieure est recouverte d'un lubrifiant, avec une émulsion de viande, caractérisé en ce qu'une enveloppe synthétique selon l'une des revendications 1 - 7 est utilisée.
